# EUROPÄISCHE PATENTANMELDUNG

(11) **EP 1 473 111 A1**
(43) Veröffentlichungstag der Anmeldung: **03.11.2004**
(21) Anmeldenummer: 04009959.0
(22) Anmeldetag: 27.04.2004
(51) Int. Cl.: B23Q 7/14, B23Q 1/00, B23Q 11/00

(54) **Spannvorrichtung**

(30) Priorität: 28.04.2003 DE 10319138
(71) Anmelder: Grob-Werke Burkhart Grob e.K., 87719 Mindelheim (DE)
(72) Erfinder: Grob, Burkhart Dr., 86825 Bad Wörishofen (DE)
(74) Vertreter: Pfister, Stefan, Dipl.-Phys.

(57) **Zusammenfassung**

Die Erfindung betrifft eine Vorrichtung für das Spannen von Gütern (2), insbesondere von werkstücktragenden Paletten (20) in Bearbeitungsmaschinen während deren Bearbeitung. Die Vorrichtung besitzt mehrere Spannbolzen (55), die mit korrespondierenden Ausnehmungen (21) des Gutes (2) zusammenwirken. Während des Spannens des Gutes durch das Eintauchen des Bolzens (55) in die Ausnehmung (21), wird auch gleichzeitig die Position bzw. Orientierung des Gutes (2) festgelegt.

## Beschreibung

Die Erfindung betrifft eine Vorrichtung für das Spannen von Gütern, insbesondere von werkstücktragenden Paletten in Bearbeitungsmaschinen während deren Bearbeitung.

Das Spannen von Gütern, inbesondere von Werkstücken, die auf Paletten aufmontiert sind, ist ein wichtiger Bestandteil für eine exakte Bearbeitung zum Beispiel in zerspanenden Bearbeitungsmaschinen. Die Spannvorrichtung muß die erheblichen Bearbeitungs- und Zerspankräfte aufnehmen und dabei die Orientierung des Werkstückes garantieren. Gerade bei hochexakten Bearbeitungen ist daher die Spannvorrichtung von äußerster Bedeutung für das exakte Bearbeitungsergebnis.

Im Stand der Technik sind dabei Anordnungen bekannt, die ein Spanneisen aufweisen. Das Spanneisen zieht die Palette gegen entsprechende Anlageflächen. Mittels Spanneisen werden die Spannkräfte auf die Palette übertragen. Die Spanneisen umgreifen dabei den Palettenrand schraubzwingenähnlich. Für die exakte Positionierung und Orientierung der Palette dienen sogenannte Indexbolzen. Die Lage der Indexbolzen ist in der Maschinensteuerung exakt wiedergegeben. Über dem auf dem Indexbolzen exakt aufgespannten Werkstück ist eine maßgenaue Bearbeitung möglich. Der Indexbolzen wirkt dabei zusammen mit entsprechenden Ausnehmungen an der Palette.

Nach dem Stand der Technik sind daher zum Beispiel vier Spanneisen vorgesehen und getrennt hiervon zum Beispiel zwei Indexbolzen. Diese Elemente greifen am Rand der Palette an. Diese Elemente sind im Bearbeitungsraum anzuordnen, da ja die Palette im Bearbeitungsraum exakt zu spannen ist. Nun sind die Platzverhälntisse im Bearbeitungsraum bereits sehr eng, und jedes zusätzliche Element, das im Bearbeitungsraum angeordnet ist, beeinträchtigt die Bewegungsmöglichkeit der Bearbeitungsspindel. Darüber hinaus sind alle Auflageflächen und Indexpunkte vor dem Spannen sicher zu reinigen, da sicher vermieden werden muß, daß Späne auf die Auflageflächen zu liegen kommen. Ein eingeklemmter Span führt unter Umständen zu einer Ausschußproduktion aufgrund der sich ergebenden Maßungenauigkeiten.

Ausgehend von dem vorgenannten Stand der Technik, ist es Aufgabe der Erfindung, eine Spannvorrichtung wie eingangs beschrieben dahingehend zu verbessern, daß eine möglichst platzsparende Anordnung realisiert wird. Gelöst wird diese Aufgabe durch eine Vorrichtung wie eingangs beschrieben, wobei vorgeschlagen wird, daß die Vorrichtung mehrere Spannbolzen besitzt, die mit korrespondierenden Ausnehmungen des Gutes derart zusammenwirken, daß während des Spannens des Gutes durch das Eintauchen des Bolzens in die Ausnehmung auch die Positionierung bzw. Orientierung des Gutes erfolgt.

Der Pfiff der Erfindung liegt darin, daß das Bestimmen (das heißt das Festlegen der Positionen und der Orientierung des Gutes) und das Spannen mit derselben Bewegung erfolgt. Es dienen hierzu auch die gleichen Elemente. Der Spannbolzen und die Ausnehmung besitzen eine Genauigkeit wie der Indexbolzen und die damit zusammenwirkenden Ausnehmungen nach dem Stand der Technik. Zusätzlich zu der Indexierung erfolgt durch die Spannbolzen auch das Festspannen.

Auf eine räumlich getrennte Anordnung eines Spanneisens und eines Indexbolzens nach dem Stand der Technik kann durch die erfindungsgemäße Lösung verzichtet werden. Die Anordnung wird platzsparender; der eingesparte Platz steht zum Beispiel für den Verfahrweg der Bearbeitungsspindel zusätzlich zur Verfügung. Dadurch erhöhen sich die Bearbeitungsmöglichkeiten. Die erfindungsgemäße Anordnung ist auch leichter spanfrei zu halten, da zum Beispiel nur noch an den vier Spannpunkten (an jeder Ecke der Palette) eine entsprechende Spänereinigung vorgesehen werden muß. Üblicherweise erfolgt dies zum Beispiel durch Preßluft.

Die erfindungsgemäße Lösung ergibt auch Zeitvorteile bei der Bearbeitung. Im Stand der Technik war es üblich, zunächst die sichere Indexierung der Palette zu erreichen und erst hernach, nachdem die Palette in Position ist, diese mit den Spanneisen zu spannen. Diese sequenzielle Abfolge des Positionierens/Orientierens und hernach Festspannens wird durch die erfindungsgemäße Lösung überwunden, da diese Schritte nunmehr gleichzeitig erfolgen. Der Werkstückwechsel erfolgt daher in kürzerer Zeit, die Effizienz einer Bearbeitungsmaschine mit einer solchen Vorrichtung steigt entsprechend.

Die erfindungsgemäße Aufgabe wird aber auch durch ein anderes Konzept in gleicher Weise gelöst. Bei diesem besitzt das Gut insbesondere mehrere Spannbolzen, die mit korresponierenden Ausnehmungen der Vorrichtung derart zusammenwirken, daß während des Spannens des Gutes durch das Eintauchen des Bolzens in die Ausnehmung auch die Position bzw. Orientierung des Gutes erfolgt. Dieses Prinzip beruht auf der kinematischen Umkehr der vorgenannten erfindungsgemäßen Lösung. Die erfindungsgemäßen Vorteile sind durch dieses Konzept in gleicher Weise zu erreichen. Zusätzlich zu der anderen Lösung sieht diese Variante vor, daß jedes Gut, gegebenenfalls also jede Palette, entsprechend bewegbare Spannbolzen aufweist. Die Antriebe der Spannbolzen können dabei zum Beispiel elektrisch, hydraulisch oder pneumatisch erfolgen.

Es ist von Vorteil, daß die Spannvorrichtung mehrere je einen Spannbolzen aufnehmenden Halter aufweist und der Halter C-artig ausgebildet ist, um das Gut seitlich zu umfassen. Die Palette wird von einer Transporteinrichtung in die C-förmigen Halter eingeschoben und dann mit den Spannbolzen sowohl bestimmt (das heißt Position und Orientierung festgelegt) als auch gespannt. Die C-artig ausgestalteten Halter erreichen daher in einfacher Weise ein Umgreifen des Palettenrandes bzw. Gutrandes.

Die Erfindung erlaubt dabei sowohl einen stehenden wie auch hängenden Transport des Werkstückes an der Palette. Es ist prinzipiell auch möglich, daß die Palette selber stehend transportiert wird und mit der erfindungsgemäßen Spannvorrichtung, exakt positioniert, festgespannt wird.

In einer weiteren Variante der Erfindung ist vorgesehen, daß an dem Halter eine Auflagefläche für das Gut vorgesehen ist, die die Spannkräfte des Spannbolzens aufnimmt. Das Einspannen erfolgt dadurch, daß das Gut bzw. der Rand des Gutes schraubzwingenartig von zwei "Backen" ergriffen und festgehalten wird. Auf der einen Seite wirkt hierbei der Spannbolzen wie beschrieben, auf der anderen Seite ist eine Auflagefläche vorgesehen, die in der Lage entsprechend exakt positionierbar ist.

Dabei ist es von Vorteil, daß die Auflagefläche durch Abstimmscheiben an dem Halter in ihrer Lage einstellbar ist. Dadurch ist eine genaue räumliche Ausrichtung der Auflagefläche möglich. Die Auflagefläche ist Teil der Spannebene und definiert damit die Bearbeitungsposition des Werkstückes.

Es ist günstig, daß ein Trennanschlag vorgesehen ist, um ein sicheres Lösen des Spannbolzens von dem Gut zu erreichen. Aufgrund der Selbsthemmung, insbesondere bei einer konischen Ausgestaltung des Spannbolzens, kann es erfolgen, daß der zu lösende Spannbolzen nicht von der Palette freikommt. Die Palette bewegt sich dann gegen einen Trennanschlag, welcher bewirkt, daß der Spannbolzen von der Palette freikommt.

Auch wenn in dieser Anmeldung oftmals nur beispielhaft von der Palette als Gut gesprochen wird, soll dies die Erfindung hierauf in keinster Weise beschränken. Für alle beispielhaften Beschreibungen der Anwendung einer Palette ist natürlich auch jedes andere Gut sinngemäß gemeint, was dem Fachmann auch klar ist.

Es ist von Vorteil, daß der Spannbolzen an seinem in das Gut eingreifenden Ende konisch, kegelstumpfartig oder zylindrisch ausgebildet ist. Die Ausnehmung im Gut ist, hierzu korrespondierend, ebenfalls gegebenenfalls konisch, kegelstumpfartig oder zylindrisch ausgebildet. Insbesondere die konischen bzw. kegelstumpfartigen Ausbildungen des Spannbolzens erleichtern das Einführen des Spannbolzens in die Ausnehmung spielfrei. Eine zylindrische Ausgestaltung, gegebenenfalls mit konisch abgedrehtem vorderen Ende des Spannbolzens, wird zum Beispiel dann eingesetzt, wenn dieser Spannbolzen nur für Befestigungszwecke, nicht aber auch gleichzeitig für Indexzwecke einzusetzen ist. Dabei ist vorgesehen, daß nicht unbedingt alle Spannbolzen der Spannvorrichtung sowohl ein Festspannen und ein gleichzeitiges exaktes Orientieren des Gutes/der Palette leisten, sondern nur einige, da dies geometrisch ansonsten zu nachteiligen Überbestimmungen führen könnte. Selbstverständlich erlaubt die Erfindung aber auch eine Anordnung mit einer geometrischen Überbestimmung, zum Beispiel um die exakte Lage der Palette an mehreren Positionen prüfen zu können.

Es ist von Vorteil, wenn der Spannbolzen möglichst spielarm oder spielfrei gelagert ist. Das Spiel des Bolzens ist, da er für die Indexierung ebenfalls zuständig ist, möglichst gering zu halten, um die Genauigkeit der ganzen Anordnung nicht zu gefährden.

In einer weiteren Variante der Erfindung ist vorgesehen, daß die Vorrichtung eine Spanntraverse aufweist und die Spanntraverse auf mehrere Spannbolzen wirkt. Für die Bewegung des Spannbolzens ist ein Antrieb vorgesehen. Um eine möglichst gleichförmige Bewegung zu erreichen, ist es günstig, einen zentralen Antrieb vorzusehen, der alle Spannbolzen einer Spannvorrichtung betätigt. Üblicherweise wird die Palette an ihrem seitlichen Rand gespannt. Das bedeutet, daß zwei Spannhalter an jeder Seite anzuordnen sind. Geschickterweise werden diese beiden Spannhalter zusammengefaßt dadurch, daß die Spannbolzen dieser Halter durch die gemeinsame Spanntraverse betätigt werden. Die Bewegung der Spanntraverse kann dabei zum Beispiel von einer zentralen Kurbelwelle abgeleitet sein, die in ähnlicher Weise auch die Spannbolzen auf der anderen Palettenseite antreibt.

Darüber hinaus erlaubt die Anordnung der Spanntraverse einen gewissen Toleranzausgleich in der Lage der Palette. Es ist nämlich vorgesehen, die Spanntraverse gelenkig mit dem Spannantrieb, zum Beispiel einer Spannstange, zu verbinden. So ist es möglich, gewisse Lagetoleranzen, die die eingeförderte Palette aufzuweisen vermag, entsprechend zu kompensieren.

Die Erfindung betrifft des weiteren eine Bearbeitungsmaschine mit einer vorgenannten Spannvorrichtung. Die erfindungsgemäße Bearbeitungsmaschine gewinnt durch den Einsatz der vorbeschriebenen Spannvorrichtung Platz im Bearbeitungsraum. Des weiteren steigt die Effizienz bzw. Leistung einer entsprechenden Bearbeitungsmaschine wie beschrieben.

Erfindungsgemäß ist vorgesehen, daß die Bearbeitungsmaschine als Zerspan-, Umform-, Füge- oder Trennmaschine ausgebildet ist oder die Bearbeitungsmaschine als Prüf-, Montage-, Justage-, Oberflächenbehandlungs-, Ver- oder Entpackstation, Kennzeichnungs- oder als Reinigungsstation ausgebildet ist. Die erfindungsgemäße Bearbeitungmaschine legt sich in keinster Weise auf die in ihr stattzufindenden Bearbeitung fest. Alle vorgenannten Bearbeitungsmöglichkeiten bedingen ein Positionieren des Werkstückes. Grundsätzlich soll das Positionieren des Werkstückes möglichst zeitoptimiert und genau erfolgen, was, unabhängig von der tatsächlichen Bearbeitung, durch die Erfindung gelöst wird. Die Erfindung ist daher für die beliebigsten Zwecke einer Bearbeitungsmaschine einsetzbar. Zum einen ist es möglich, daß die Bearbeitungsmaschine tatsächlich das Werkstück bearbeitet, also zum Beispiel zerspant, umformt, fügt oder trennt. Darüber hinaus ist es aber auch von Vorteil, daß die Bearbeitungsmaschine als Prüfstation ausgebildet ist, um zum Beispiel entsprechende Bearbeitungen einer davorliegenden Bearbeitungsmaschine zu kontrollieren. Dabei ist es von Vorteil, möglichst frühzeitig entsprechende Prüfungen vorzusehen, um nicht bei der Endkontrolle, wenn eine Vielzahl von Bearbeitungen stattgefunden hat, zu erkennen, daß bereits bei einer frühzeitigen Bearbeitung ein Fehler aufgetreten ist und das ganze Werkstück Ausschuß ist. Es ist auch möglich, die Bearbeitungsmaschine als Montagestation auszubilden. Zum Beispiel ist es möglich, in eine vorher eingebrachte Bohrung das Gewinde einzuschneiden und dann in der Montagestation in diesem Gewinde ein weiteres Bauteil zu montieren. Es ist aber auch möglich, in einer Montagestation zum Beispiel einen Werkstückträgerwechsel durchzuführen, also zum Beispiel einen anderen Werkstückträger zu montieren.

Gleichwohl ist es günstig, die Montagestation zur genauen Positionierung beziehungsweise Ausrichtung des Werkstückes vorzusehen. Des weiteren ist es möglich, daß die Bearbeitungsmaschine als Oberflächenbehandlungsstation ausgebildet ist. Diese dient zum Beispiel zum Lackieren, Galvanisieren, Bedrucken usw. Als Bearbeitungsmaschinen werden auch Ver- oder Entpackstationen angesehen, die zum Beispiel das Werkstück nach Abschluß der Verarbeitung verpacken oder vor der Bearbeitung entpacken.

Des weiteren kann als Bearbeitungsmaschine auch eine Einrichtung zur Kennzeichnung von Werkstücken vorgesehen sein. In einer Kennzeichnungsstation ist vorgesehen, daß zum Beispiel Etiketten oder sonstige Kennzeichnungen, gegebenenfalls auch elektronisch auslesbare Kennzeichnungen wie Barcode oder Transponder, an das Werkstück beziehungsweise seine Werkstückträger beziehungsweise Palette angeheftet oder angebracht werden, um das jeweilige Werkstück für die Steuerung zu personifizieren. In der Regel geht dabei ein entsprechender Identifikationsschritt (allerdings nicht zwingend) voraus.

Günstig ist es dabei auch, daß als Bearbeitungsmaschine eine Reinigungsstation beziehungsweise Spül- oder Waschstation vorgesehen ist. Oftmals werden die Werkstücke während der Bearbeitung, zum Beispiel durch Kühlschmiermittel, verschmutzt, welches gerade am Ende einer entsprechenden Prozeßlinie abzuwaschen ist. Auch ist es nicht günstig, entsprechende ölhaltige Emulsionen auf den Werkstücken zu belassen, wenn nachfolgend eine Oberflächenbehandlung, wie eine Lackierung oder sonstige Beschichtung, erfolgen soll.

Die vorgenannten Bearbeitungsmaschinen sollen sowohl als automatisch arbeitende Systeme oder auch als Handarbeitsplätze im Sinne der Erfindung ausgeführt sein.

In der Zeichnung ist die Erfindung schematisch dargestellt. Es zeigen:
- Fig. 1: in einer Seitenansicht die erfindungsgemäße Bearbeitungsmaschine mit der erfindungsgemäßen Spannvorrichtung,
- Fig. 2: ein Detail der erfindungsgemäßen Spannvorrichtung,
- Fig. 3: in einer Draufsicht die Palette gemäß der Erfindung,
- Fig. 3a und 3b: Details nach Fig. 3.

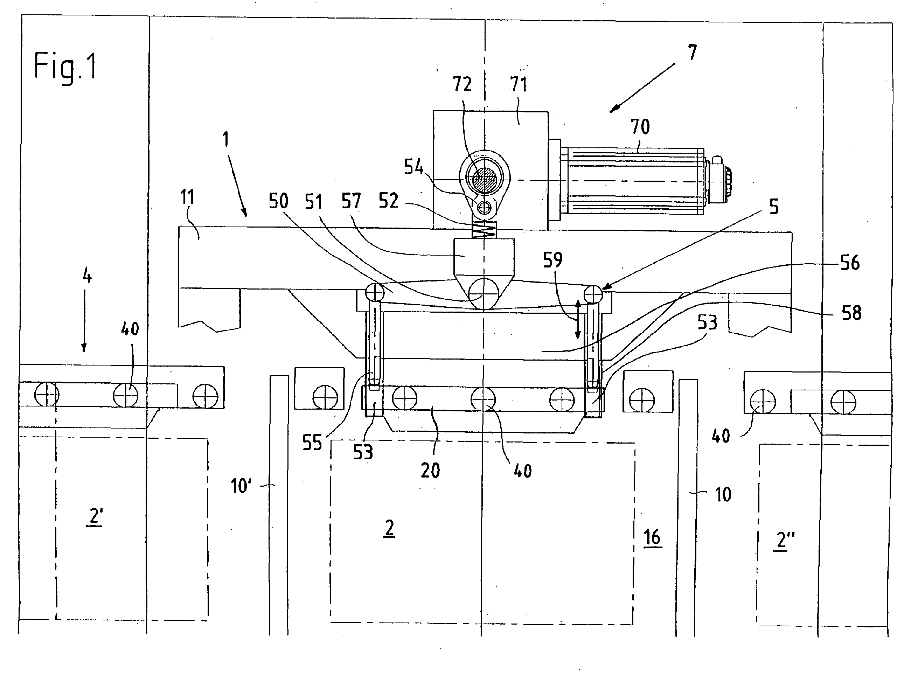

Die Erfindung ist schematisch in Fig. 1 gezeigt. Fig. 1 zeigt eine erfindungsgemäße Bearbeitungsmaschine mit der erfindungsgemäßen Spannvorrichtung. Die Bearbeitungsmaschine 1 ist zur besseren Übersichtlichkeit nur teilweise gezeichnet. Insbesondere ist das Gestell teilweise nur angedeutet. Der Bearbeitungsraum 16 der Bearbeitungsmaschine wird begrenzt zum einen durch das Gehäuse und zum anderen durch Türen 10, 10'.

Die Bearbeitungsmaschine dient dazu, an Gütern 2 beliebige Bearbeitungen vorzunehmen. Die Güter 2 werden dabei von einer Transporteinrichtung 4 in den Bearbeitungsraum 16 transportiert. In dem hier gezeigten Ausführungsbeispiel hängt ein Gut als Werkstück 2 an einer Palette 20. In Fig. 1 sind insgesamt drei Güter 2, 2', 2 " angedeutet. Dabei befindet sich das Gut 2 in der Mitte in der Bearbeitungsmaschine, das Gut 2'' ist bereits aus dem Bearbeitungsraum heraustransportiert worden, die Bearbeitungstür 10 ist bereits wieder geschlossen. Das nächstfolgende Werkstück 2' steht vor der Tür 10' bereits zur weiteren Bearbeitung bereit.

Die Transporteinrichtung 4 ist zum Beispiel als aus Rollen 40 bestehende Rollenbahn gebildet.

Die erfindungsgemäße Spannvorrichtung 5 dient dazu, in dem hier gezeigten Ausführungsbeispiel die Palette 20 im Bearbeitungsraum 16 zu spannen. Auch wenn hier das Zusammenwirken der Spannvorrichtung 5 mit einer Palette 20 gezeigt ist, ist die Erfindung hierauf nicht beschränkt. Die Palette 20 ist ein spezieller Fall des Gutes 2. Es kann auch das Werkstück 2 direkt gespannt werden.

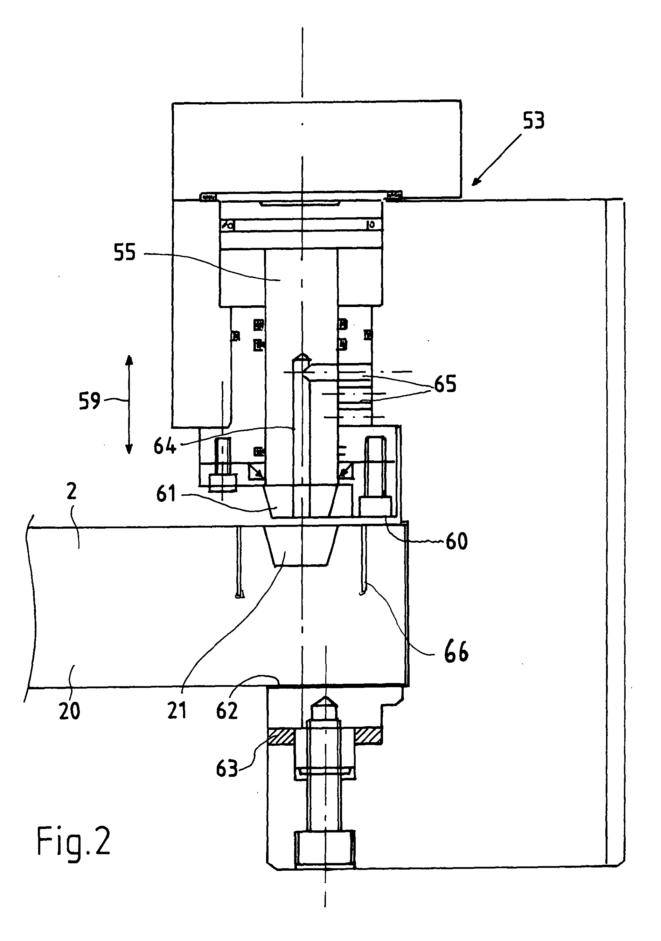

Die Spannvorrichtung 5 ist gebildet durch mehrere Halter 53, die ihrerseits den Spannbolzen 55 aufweisen. Die genaue Ausgestaltung des Halters 53 ist in Fig. 2 gezeigt.

Für das Spannen bzw. Indexieren führen die Spannbolzen 55 eine vertikale Bewegung 59 aus. Hierfür dient ein Antrieb 7. Der Antrieb 7 wird gebildet von einem Motor 70, der über ein Getriebe 71 eine Antriebswelle 72 antreibt. Auf der Antriebswelle 72 sitzt ein Pleul 54, welches die Rotationsbewegung der Antriebswelle in eine Linearbewegung umsetzt. Letztendlich wirkt das Pleul 54 auf die Spannstange 57, die ihrerseits letztendlich den Spannbolzen 55 (gegebenenfalls zwangsgeführt) betätigt. Die Antriebswelle 72 versorgt in diesem Fall mehrere Spannbolzen 55 mit der notwendigen Bewegung. Es ist natürlich auch möglich, daß für jeden Spannbolzen ein eigener, autonomer Antrieb vorgesehen ist.

Günstig bei dieser Ausgestaltung ist, daß die Spannstange 57 auf eine Spanntraverse 50 wirkt und die Spanntraverse 50 im hier gezeigten Ausführungsbeispiel zwei Spannbolzen 55 bewegt. Zwischen dem Pleul 54 und der Spannstange 57 ist ein Federpaket 52 für ein Ausgleichen der Spannkräfte vorgesehen, da es pro Spannvorrichtung zwei Spanntraversen 50 gibt, um vier Spannpunkte zu erreichen, welche mit einem Motor betätigt werden.

Die Spanntraverse 50 ist dabei über ein Gelenk 51 mit der Spannstange 57 verbunden, wodurch sich gewisse Lagetoleranzen leicht ausgleichen lassen. Gegebenenfalls wirkt die Spanntraverse 50 auch gelenkig auf die jeweiligen Spannbolzen 55.

Anstelle eines mechanischen Antriebes für die Spannbolzen 55 ist es auch möglich, die Spannbolzen zum Beispiel hydraulisch oder pneumatisch anzutreiben.

In dem hier gezeigten Ausführungsbeispiel weist das Maschinengestell 11 ein Führungsgestell 56 für die Führung der Spannbolzen 55 auf. An diesen ist gegebenenfalls auch der Halter 53 angeschlossen.

Das Führungsgestell 56 nimmt die Bolzenführungen 58 für die Spannbolzen 55 auf.

In Fig. 2 ist der Halter 53 der erfindungsgemäßen Spannvorrichtung 5 in einem Detail gezeigt. Der Halter 53 ist dabei C-artig ausgebildet, um das Gut 2, 20 seitlich zu umfassen. Die Transportrichtung ist zum Beispiel senkrecht zur Plattebene. Die C-artige Ausgestaltung umfaßt geschickterweise den Rand des Gutes 2 bzw. der Palette 20, die hier zum Beispiel für ein Festspannen und Indexieren eingeschoben ist. In dem Ausführungsbeispiel ist oberhalb der Palette 20 der Spannbolzen 55 vorgesehen, der durch eine Vertikalbewegung 59 zu einem unteren Ende 61 in eine Ausnehmung 21 der Palette 20 einzutauchen vermag. Die Führung des Spannbolzens 55 ist spielfrei oder äußerst spielarm. Unterhalb der Palette 20 ist eine exakt ausrichtbare Auflagefläche 62 vorgesehen. Sie ist Teil der Spannebene. Die exakte Lage der Auflage 62 ist durch einbaubare Abstimmscheiben 63 einstellbar. Die Palette wird kraft- und formschlüssig durch den in die Ausnehmung 21 eingefahrenen Spannbolzen 55 zwischen dem Spannbolzen 55 und der Auflage 62 für Bearbeitungszwecke gehalten.

Da sich ergeben kann, daß zum Beispiel aufgrund Selbsthemmung das vordere Ende des Bolzens sich nicht einfach aus der Ausnehmung herauslöst, ist ein Trennanschlag 60 vorgesehen. Dieser Trennanschlag 60 ist seitlich rechts neben der Spannbolzenführung angeordnet. Ergibt es sich nun, daß, wenn die Spannvorrichtung 5 geöffnet wird, das vordere Ende 61 des Spannbolzens 55 nicht aus der Ausnehmung 21 freikommt, so wird die Palette 20 nach oben gehoben, bis diese an dem Trennanschlag 60 anliegt. Zwangsweise wird dann der Spannbolzen aus der Ausnehmung 21 herausgezogen.

Der Spannbolzen 55 besitzt eine axiale Bohrung 64. Diese Bohrung 64 ist mit Druckluftzuleitungen 65 verbunden. Jedoch ist es möglich, vor und nach dem Einfahren des Spannbolzens die Ausnehmung 21 zum Beispiel von Spänen und dergleichen zu reinigen.

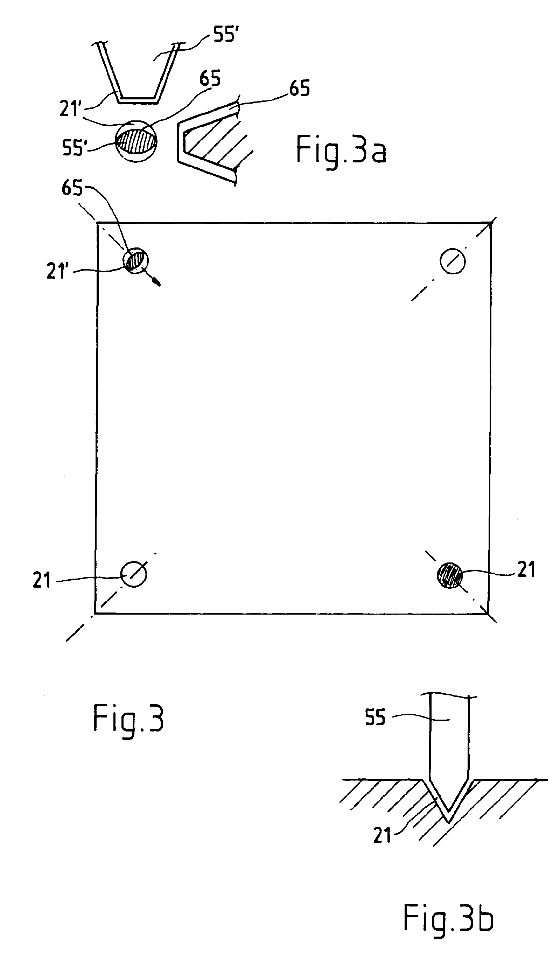

In Fig. 3 ist die Palette 20 schematisch gezeigt. Es handelt sich hierbei um eine im wesentlichen quadratische Palette, die an ihren Randbereichen in der Ecke die Ausnehmungen 21 besitzt. Die Ausnehmungen 21 sind zum Beispiel konisch, kegelstumpfartig, als Kegel oder zylinderisch ausgebildet. Auf der Palette 20 ist das Werkstück 2 aufmontiert.

Günstigerweise besitzt die Palette zumindest an ihren Ecken je eine Ausnehmung 21. In der dargestellten Ausführungsform der Erfindung sind die Ausnehmungen 21 auf der linken Seite und rechts oben mit Spiel versehen, während die dunkel ausgefüllte Ausnehmung 21 rechts unten ohne Spiel ausgeführt ist.

Gemäß der Erfindung wird mit der Spannvorrichtung nicht nur das Gut gespannt, sondern gleichzeitig auch in seiner Position und Orientierung festgelegt, also bestimmt. Da die vier Auflagepunkte dazu führen, daß die ganze Anordnung geometrisch überbestimmt ist, ist in einer erfindungsgemäßen Variante vorgesehen, daß nicht unbedingt alle Ausnehmungen 21 bei der Bestimmung der Palette mitwirken. Erfindungsgemäß ist aber auch vorgesehen, daß eine gewisse Überbestimmung durchaus erwünscht ist.

In Fig. 3b ist in einer Detailansicht das Eintauchen des Spannbolzens 55 in die Ausnehmung 21 schematisch dargestellt. Dies ist ein erster Halter, der für die Positionierung der Palette in einer Spannebene dient.

Günstigerweise ist der Spannbolzen hier an seinem vorderen, in die Ausnehmung 21 eintauchenden Ende als Vollkegel ausgebildet. Hierdurch wird die Palette in der Spannebene definiert festgelegt. Es verbleibt aber immer noch die Möglichkeit einer Rotationsbewegung in dieser Spannebene um diesen Spannbolzen.

Um auch diesen Freiheitsgrad zu eliminieren ist ein zweiter Halter vorgesehen, der bevorzugt diagonal an der Palette gegenüberliegend eingesetzt ist (Fig. 3), der bewirkt, daß die Palette in der Spannebene festgelegt ist. Um eine Überbestimmung zu vermeiden, besitzt der Spannbolzen dieses zweiten Halters seitliche Abflachungen 65. Die Abflachungen 65 sind dabei so angeordnet, daß sie sich auf der Verbindungslinie der beiden mit dem ersten und zweiten Halter zusammenwirkenden Ausnehmungen 21, 21' befinden. Die Ausgestaltung ist in Fig. 3a schematisch gezeigt. Die Situation in der Ausnehmung ist durch zwei jeweils vergrößerte Schnittdarstellungen bei Fig. 3a gezeigt. Der Spannbolzen 55' bewirkt daher nur ein Festlegen in eine Richtung rechtwinklig zur Palettendiagonale. Es ist günstig, daß die Spannbolzen 55 und 55' des ersten und zweiten Halters quasi gleichzeitig in die jeweiligen Ausnehmungen 21, 21' in der Palette eingreifen. Das räumliche Festlegen der Palette sowohl bezüglich der Spannebene wie auch fest in der Spannebene erfolgt damit gleichzeitig automatisch.

Die Anordnung in Fig. 3 macht deutlich, daß die Ausnehmungen 21 in der Palette 20 unterschiedlich sind. In Fig. 3b ist eine kegelartige Ausnehmung gewählt, in Ausnehmung 21' nach Fig. 3a ist es eine kegelstumpfartige Ausbildung. Dies bereitet keine Probleme im Einsatz, solange die Palette im Einsatz nicht gedreht wird. Für den Fall, daß die Palette gedreht wird, ist es von Vorteil, wenn alle Ausnehmungen 21 gleichartig sind. Des weiteren ist an der Palette gegebenenfalls vorgesehen, in einem Bereich an der Ausnehmung 21 der Palette Nuten 66 anzuordnen. Diese erlauben eine gewisse Ausgleichsmöglichkeit. Geschickterweise werden diese Nuten nicht bei diesen Ausnehmungen angeordnet, die für die Bestimmung der Position bzw. Orientierung vorgesehen sind. Abflachungen der Kegelstümpfe bzw. der Führungen sind ebenfalls nach der Erfindung vorgesehene Ausführungsformen, die gewisse Ausgleichsmöglichkeiten erlauben.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik, beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtung für das Spannen von Gütern, insbesondere werkstücktragende Paletten in Bearbeitungsmaschinen während deren Bearbeitung, **dadurch gekenzeichnet, daß** die Vorrichtung mehrere Spannbolzen (55) besitzt, die mit korrespondierenden Ausnehmungen (21) des Gutes (2) derart zusammenwirken, daß während des Spannens des Gutes durch das Eintauchen des Bolzens in die Ausnehmung auch die Positionierung bzw. Orientierung des Gutes erfolgt.

2. Vorrichtung für das Spannen von Gütern, insbesondere werkstücktragende Paletten in Bearbeitungsmaschinen während deren Bearbeitung, **dadurch gekennzeichnet, daß** das Gut insbesondere mehrere Spannbolzen besitzt, die mit korrespondierenden Ausnehmungen der Vorrichtung derart zusammenwirken, daß während des Spannens des Gutes durch das Eintauchen des Bolzens in die Ausnehmung auch die Positionierung bzw. Orientierung des Gutes erfolgt.

3. Vorrichtung nach einem oder beiden der vorhergehenden Ansprüche, **dadurch gekennzeichnet, daß** die Spannvorrichtung (5) mehrere je einen Spannbolzen (55) aufnehmenden Halter (53) aufweist und der Halter (53) C-artig ausgebildet ist, um das Gut (2) seitlich zu umfassen und/oder an dem Halter (53) eine Auflagefläche (62) für das Gut (2) vorgesehen ist, die die Spannkräfte des Spannbolzens (55) aufnimmt und/oder die Auflagefläche (62) durch Abstimmscheiben (63) an dem Halter (53) in ihrer Lage einstellbar ist.

4. Vorrichtung nach einem oder mehreren der vorhergehenden Ansprüche, **dadurch gekennzeichnet, daß** ein Antrieb (7) für den Spannbolzen vorgesehen ist.

5. Vorrichtung nach einem oder mehreren der vorhergehenden Ansprüche, **dadurch gekennzeichnet, daß** ein Trennanschlag (60) vorgesehen ist, um ein sicheres Lösen des Spannbolzens (55) von dem Gut (2) zu erreichen.

6. Vorrichtung nach einem oder mehreren der vorhergehenden Ansprüche, **dadurch gekennzeichnet, daß** der Spannbolzen (55) an seinem in das Gut (2) eingreifenden Ende konisch, kegelstumfartig oder zylindrisch ausgebildet ist und/oder wenigstens ein Spannbolzen (55) möglichst spielarm oder spielfrei gelagert ist und/oder ein weiterer Spannbolzen in wenigstens einer Richtung spielarm gelagert ist und/oder die Ausnehmung(21) im Gut (2) konisch, kegelstumpfartig oder zylindrisch ausgebildet ist.

7. Vorrichtung nach einem oder mehreren der vorhergehenden Ansprüche, **dadurch gekennzeichnet, daß** die Palette (20) zumindest an ihren Ecken je eine Ausnehmung (21) aufweist und/oder die Ausnehmungen (21) einer Palette (20) gleichartig oder unterschiedlich sind und/oder mit einem Spiel bzw. ohne Spiel ausgebildet sind, vorzugsweise drei Ausnehmungen mit und eine Ausnehmung ohne Spiel.

8. Vorrichtung nach einem oder mehreren der vorhergehenden Ansprüche, **dadurch gekennzeichnet, daß** an der Vorrichtung (5) ein erster Halter (53) vorgesehen ist für die Positionierung der Palette (20) in der Spannebene und/oder an der Vorrichtung (5) ein zweiter Halter, bevorzugt diagonal zu dem ersten Halter, auf der Palette (20) vorgesehen ist und die Palette (20) in der Spannebene festlegt.

9. Vorrichtung nach einem oder mehreren der vorhergehenden Ansprüche, **dadurch gekennzeichnet, daß** die Spannbolzen (55) des ersten und zweiten Halters quasi gleichzeitig in die jeweiligen Ausnehmungen (21) an der Palette (20) eingreifen und/oder der Spannbolzen (55) des ersten Halters als Vollkegel ausgebildet ist und/oder der Spannbolzen (55') des zweiten Halters seitliche Abflachungen aufweist, die sich auf der Verbindungslinie der beiden mit dem ersten und zweiten Halter zusammenwirkenden Ausnehmungen (21) befindet.

10. Vorrichtung nach einem oder mehreren der vorhergehenden Ansprüche, **dadurch gekennzeichnet, daß** die Vorrichtung (5) eine Spanntraverse (50) aufweist und die Spanntraverse (50) auf mehrere Spannbolzen (55) wirkt und/oder die Spanntraverse (50) gelenkig mit dem Spannantrieb (7), z.B. einer Spannstange (57) verbunden ist und/oder der Spannbolzen eine Bohrung für Druckluft aufweist.

11. Vorrichtung nach einem oder mehreren der vorhergehenden Ansprüche, **dadurch gekennzeichnet, daß** im Bereich einer Ausnehmung (21) der Palette Nuten (66) vorgesehen sind und/oder die Ausnehmungen 21 kegelstumpfartig ausgebildet sind und vorzugsweise Abflachungen im Bereich der Kegelstümpfe bzw. Abflachungen der Führungen aufweisen.

12. Vorrichtung nach einem oder mehreren der vorhergehenden Ansprüche, **dadurch gekennzeichnet, daß** zumindest ein Teil der Spannbolzen (55), vorzugsweise alle Spannbolzen, eine Feder aufweist, die derart angeordnet ist, daß das Gut bei Energieausfall in Position gehalten wird.

13. Bearbeitungsmaschine, insbesondere spanabhebende Bearbeitungsmaschine, für das Bearbeiten von Gütern wie auf Paletten aufgespannten Werkstücken, wobei das Gut bzw. die Palette von einer Vorrichtung nach einem oder mehreren der vorhergehenden Ansprüche gespannt wird.
